# EUROPEAN PATENT APPLICATION

(11) **EP 2 724 643 A1**
(43) Date of publication of application: **30.04.2014**
(21) Application number: 13190116.7
(22) Date of filing: 24.10.2013
(51) Int. Cl.: A47C 3/30, F16F 9/02, A47C 7/00, F16B 39/24, F16B 7/14, F16B 2/24

(54) **Locking device**

(30) Priority: 25.10.2012 SE 1251208
(71) Applicant: KINNARPS AB, 521 88 Kinnarps (SE)
(72) Inventor: Ekbom, Arne, 521 72 Slutarp (SE)
(74) Representative: Jacobsson, Peter

(57) **Abstract**

Device (1) for locking of an element (2) to a cylinder device (6), the device (1) further comprising a locking ring (3) and the element (2), wherein the element (2) comprises a first anvil (4) and a second anvil (5) arranged to be moved in relation to each other in the axial direction of the cylinder device (6) between a first position and a second position, wherein the locking ring (3) comprises an axis (3'), wherein the locking ring (3) has a first axial end surface (7) and a second axial end surface (8), wherein at least the first end surface (7) comprises at least a first subsection (7a) wherein the normal direction (7a') of the first subsection (7a) has an angle α≠0 to the axis of the locking ring (3'), wherein the locking ring (3) is arranged between the first anvil (4) and the second anvil (5) such that the locking ring (3) in the first position can be moved freely in the axial direction of the cylinder device (6) and in the second position is clamped against the cylinder device (6).

## Description

### Technical field

The present invention relates generally to a device for locking of an element to a cylinder device.

### Background art

It is known to lock or fixate foot supports to column tubes or cylinder devices such as cylinders in gas spring provided office chairs that by the gas spring comprise a height adjustment device. For example, wedge-shaped column tubes that mechanically lock in a hole in the foot supports are used. Another known example is screw fastening devices with spacers arranged between the ends of the screw fastening device and the column tubes that allows a certain adjustment of the locking force between the foot rests and column tubes.

A drawback with the known art is that the locking between the foot support and the column tube has to be made sufficiently strong to prevent sliding of the chair in a vertical direction. If the locking is made to strong, on the other hand, for instance if one tightens a screw fastening device to hard around the column tube, the column tube may be damaged and therefore damages or increases the friction against the column tube of the gas spring so that vertical adjustment is made difficult or entirely seizes to work. For instance, an increased friction can render the force of the piston insufficient for lifting the chair seat vertically or that a person of low weight, such as a child, does not have enough mass to be able to press the chair seat downwards and lower it vertically. Another drawback is that the locking between the foot support and the column tube cannot be placed optionally on sections along the column tube, but that this needs to be done where the risk for damages on the column tube/gas spring is reduced. It is desirable to be able to place a locking at the upper part of the column tube so that small persons such as children are able to reach down to the foot support. Such placement of the locking is unsuitable using the known art in light of the above. Other drawbacks are that the locking between the foot support and the column tube requires several components to work or risk scratching the paint of the column tube such that it receives a less aesthetically appealing appearance.

### Summary of invention

An object of the present invention is to lock an element to a cylinder device in an easy way without the formation of clamping or surface damages on the cylinder device.

Another object of the invention is to reduce the cost for production and transportation of the same.

At least one of the above mentioned objects is achieved by the following:

According to one embodiment, a device is shown for locking an element to a cylinder device extending in an axial direction,
the device further comprising a locking ring and the element,
wherein the element comprises a first anvil and a second anvil arranged to be moved in relation to each other in the axial direction of the cylinder device between a first position and a second position, wherein the first and second anvils are at a shorter distance from each other in the second position than in the first position, wherein in the first anvil and the second anvil can be locked in relation to each other to prevent a movement from the second position to the first position,
wherein the locking ring comprises an axis, wherein the locking ring has a first axial end surface and a second axial end surface, wherein at least the first end surface comprises at least a first subsection wherein the normal direction of the first subsection has an angle α≠0 to the axis of the locking ring,
wherein the locking ring is arranged between the first anvil and the second anvil such that the locking ring in the first position can be moved freely in the axial direction of the cylinder device whereby the normal direction of the first subsection of the first end surface has an angle β=β1 in the first position to the axis of the cylinder device, wherein the locking ring in the second position is clamped between the first and second anvil such that the normal direction of the first subsection is caused to change direction such that the angle β=β₂ in the second position, whereby β₂ < β₁, whereby the locking ring is locked to the cylinder device by the pressing of a first subsection of the inner surface of the locking ring against the outer surface of the cylinder device and by the pressing of a second subsection of the inner surface of the locking ring against the outer surface of the cylinder device.

According to a further embodiment, a device is shown for locking of an element to a cylinder device, wherein the inner surface of the locking ring is convex.

According to another embodiment, a device is shown for locking of an element to a cylinder device, wherein the angle α is in the interval 0< α ≤20°, more preferably in the interval 2°≤ α ≤15°, most preferably the angle α is in the interval 3°≤ α ≤7°.

According to a further embodiment, a device is shown for locking of an element to a cylinder device, wherein the first axial end surface further comprises a second subsection having a normal direction, whereby the normal direction of the first subsection is separate from the normal direction of the second subsection, whereby the first axial end surface comprises a first and a second fulcrum in the transitions between the first subsection and the second subsection , and a pivot axis that extends through the first and second fulcrum, wherein the second subsection rests against the first anvil and the first subsection has a distance to the first anvil in the first position, wherein the second subsection has a distance to the first anvil.

According to a further embodiment, a device is shown for locking of an element to a cylinder device, wherein a distance a₁ from a center point between the first and second fulcrums along the pivot axis to an outer surface of the locking ring perpendicular from the pivot axis is shorter than a distance a₂ from the center point perpendicular from the pivot axis to the outer surface which is opposite the outer surface defining the distance a₁.

According to a further embodiment, a device is shown for locking of an element to a cylinder device, wherein the outer surface of the locking ring axially directed from the first subsection comprises recesses.

According to a further embodiment, a device is shown for locking of an element to a cylinder device, wherein the normal direction of the first subsection of the first axial end surface is parallel to the normal direction of the second axial end surface.

According to a further embodiment, a device is shown for locking of an element to a cylinder device, wherein a protruding device is arranged in the first axial end surface, wherein the protruding device is adapted to fit in a recess in the first anvil to prevent rotation of the locking ring.

According to a further embodiment, a device is shown for locking of an element to a cylinder device, wherein the first anvil comprises a cup-shaped device which is adapted to receive the locking ring.

According to a further embodiment, a device is shown for locking of an element to a cylinder device, wherein the second anvil comprises a threading section, and that the first anvil comprises a threading section adapted to receive the threading section of the second anvil such that the anvils can be screwed into each other from a first to a second position.

According to a further embodiment, a device is shown for locking of an element to a cylinder device, wherein the inner surface of the locking ring comprises a surface or a coating which increases the friction between the cylinder device and the locking ring, such as for instance a plastic layer or rubber.

According to a further embodiment, a device is shown for locking of an element to a cylinder device, wherein the locking ring is made of zinc, stainless steel or sintered material.

According to a further embodiment, a device is shown for locking of an element to a cylinder device, wherein the cylinder device is a tubular device.

According to a further embodiment, a device is shown for locking of an element to a cylinder device, wherein the element comprises a foot support for a chair.

According to a further embodiment, a device is shown for locking of an element to a cylinder device, wherein the tubular shaped device constitutes the leg of the chair and comprises a gas spring.

According to a further embodiment, a device is shown for locking of an element to a cylinder device, wherein the first subsection of the inner surface of the locking ring corresponds to an area at a distance from the first subsection of the first end surface which distance preferably is less than 50%, more preferably between 10-30% of the total distance from the first subsection to the second end surface along the inner surface, wherein the second subsection of the inner surface of the locking ring corresponds to an area at a distance from the second end surface which distance preferably is less than 50%, more preferably between 10-30% of the total distance from the second end surface to the second subsection of the first end surface along the inner surface.

According to a further embodiment, a device is shown for locking of an element to a cylinder device, wherein the spring is arranged on the second anvil extending in an axial direction of the anvil to move the locking ring into the cup-shaped device of the second anvil.

According to a further embodiment, a locking ring is shown for use in a device for locking of an element to a cylinder device.

It should be noted that the invention can be freely combined within the scope of the patent claims.

### Brief description of drawings

The invention is now described, by way of example, with reference to the accompanying drawings, in which:

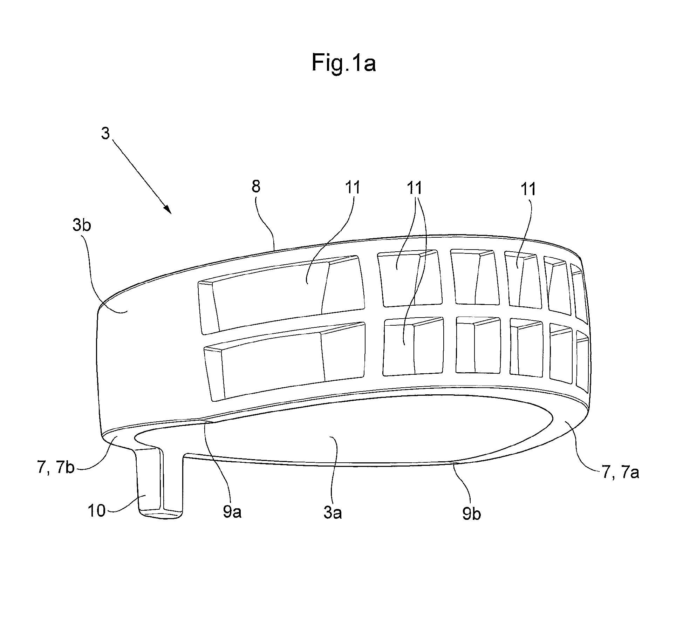

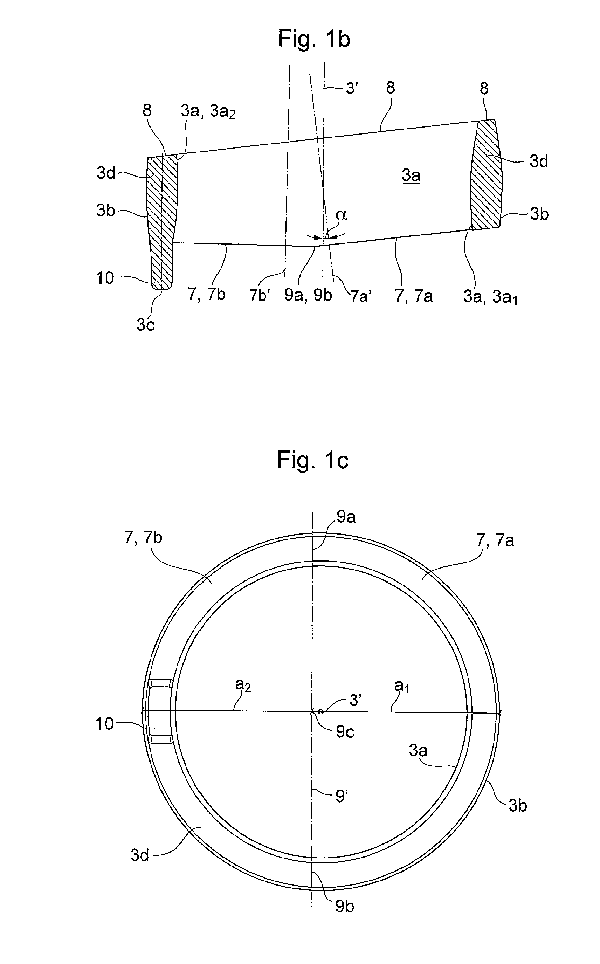

Fig. 1 a shows a perspective view of a device for locking of an element to a cylinder device.
Fig. 1 b shows a cross-section view of a device for locking of an element to a cylinder device according to Fig. 1.
Fig. 1 c shows a side view in an axial direction of a device for locking of an element to a cylinder device according to Fig. 1.
Fig. 2a and 2b shows cross-section views of a device for locking of an element to a cylinder device according to Fig. 1.
Fig. 3a shows a cross-section view of a locking ring for locking of an element to a cylinder device.
Fig. 3b shows a cross-section view of a locking ring for locking of an element to a cylinder device according to Fig. 3a.

### Description of embodiments

In the following, a detailed description of embodiments is done with reference to the accompanying drawings. It should be noted that the drawings solely are for illustrating the embodiments and shall not be considered to restrict the scope of the invention. Indication of directions should be considered as indication of directions in the drawings.

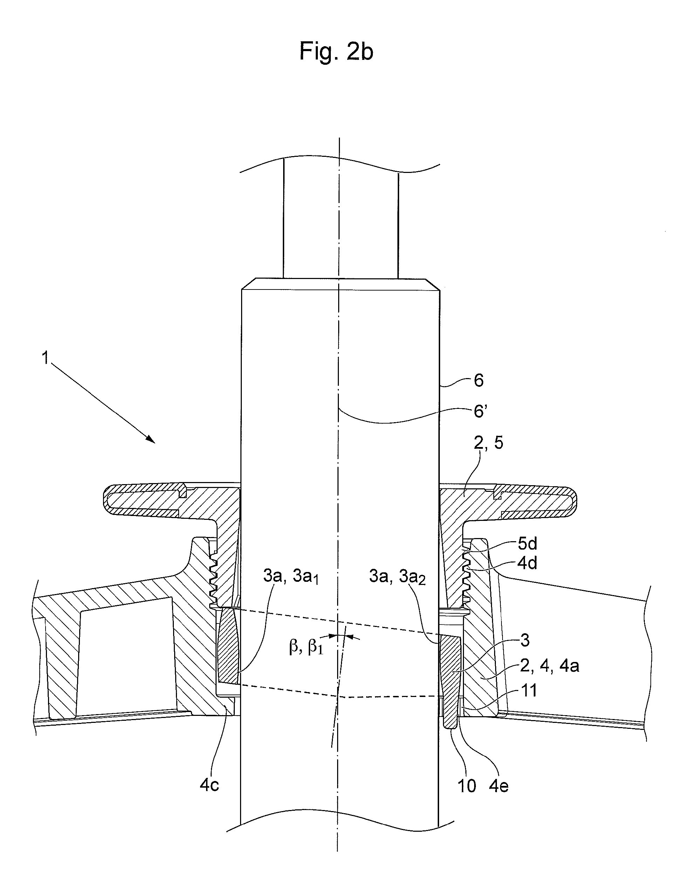

According to one embodiment, the device 1 of the present invention comprises three parts, a locking ring 3, and an element 2 comprising a first anvil 4 and a second anvil 5, for instance shown in Fig. 2b. With the device 1 a detail connected to or integrated with the element 2 can be locked to a cylinder shaped device 6, also referred to as cylinder device 6, by locking of the element 2 to the cylinder shaped device 6.

Fig. 1 a shows a perspective view of a locking ring 3 that has a ring- or annular shaped design, i.e. comprising an essentially circular wall seen in an axial direction. As shown in a cross-section view of the locking ring 3 according to Fig. 1 b the locking ring 3 extends in an axial direction along the axis 3' of the locking ring, which axis 3' essentially runs parallel to the wall 3d of the locking ring 3, or a center line 3c running centrally through the wall 3d of the locking ring 3. The locking ring 3 further comprises an inner surface 3a and an outer surface 3b. The locking ring 3 has a first axial end surface 7 and a second axial end surface 8. The center line 3c is thus an imagined line drawn centrally through the wall 3d, i.e. through a center point of a respective end surface of the wall 3d corresponding to the first and second axial end surface respectively 7, 8. The first axial end surface 7 comprises a first subsection 7a. According to one embodiment, the axial end surface comprises a second subsection 7b. The first subsection 7a has a normal direction 7a', i.e. the direction perpendicular from the surface of the subsection 7a, which is non-parallel to the axis 3' of the locking ring. An angle α that is formed between the axis 3' of the locking ring and the normal direction 7a' of the first subsection 7a' is thus non-zero, i.e. separate from 0. According to one embodiment, the angle α is in the interval 0< α ≤20°, more preferably in the interval 2°≤ α ≤15°, most preferably the angle α is in the interval 3°≤ α ≤7°.

As shown in Fig. 1 b the inner surface 3a of the locking ring is convex according to one embodiment. According to another embodiment, the outer surface 3b of the locking ring is convex. According to one embodiment, the first axial end surface 7 comprises a second subsection 7b which has a normal direction 7b', i.e. the direction perpendicular from the surface of the subsection 7b, which is parallel to the axis 3' of the locking ring. According to one embodiment, the normal direction 7b' has an angle to the axis 3' of the locking ring. Thereby, the first axial end surface 7 comprises a first and second subsection 7a, 7b wherein the first axial subsection 7a can be described as a cut end surface.

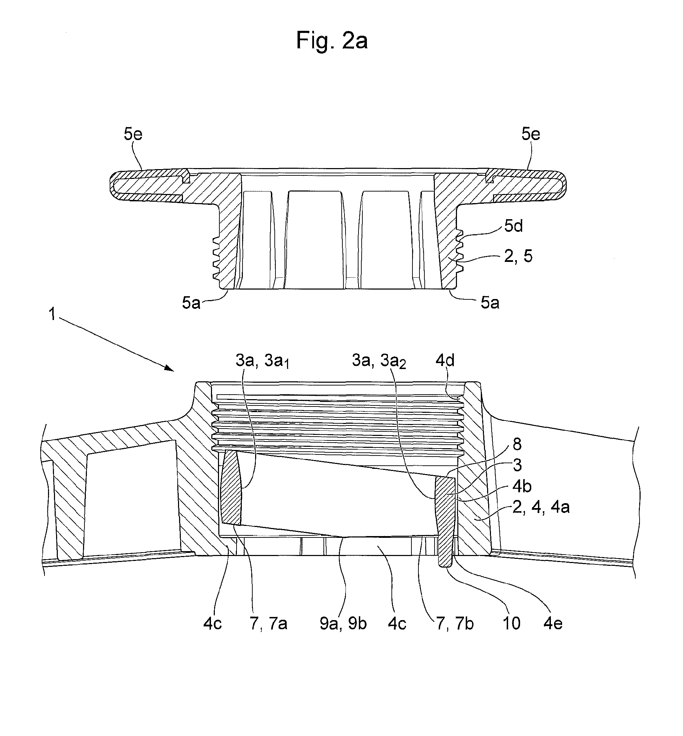

As shown in Fig. 1 c the cut first axial end surface 7 comprises a first fulcrum 9a and a second fulcrum 9b in the transitions between the first and second subsection 7a, 7b and an imagined pivot axis 9' which extends between the first 9a and second 9b fulcrum. According to one embodiment, the first axial end surface 7a is cut so that a distance a₁ from a center point 9c between the first and second fulcrums 9a, 9b along the pivot axis 9' to the outer surface 3b perpendicular from the pivot axis 9' is shorter than a distance a₂ from the center point 9c, perpendicular from the pivot axis 9' to the outer surface 3b which is opposite the outer surface defining the distance a₁. In other words, the fulcrums are arranged so that the pivot axis 9' is separate from the axis 3' of the locking ring in such way that the cut surface extends over the axis of the locking ring. By this placement of the pivot axis 9' the torque arm is increased whereby a lower force is required for locking of the element 3 to the cylinder shaped device 6. This placement of the pivot axis 9' will further release, i.e. unlock the locking ring 3 from the cylinder shaped device 6, in a faster and safer manner, during unlocking as the cylinder shaped device 6 is arranged in a vertical direction and the force of gravity influences the element 2. To be able to maximize the torque arm in a vertical direction of the cylinder shaped device , i.e. make the distance a₂ as short as possible without allowing the locking ring 3 to pivot/tilt and thus rest against the end surface 7a, i.e. that the locking ring 3 thereby is biased by the aid of the force of gravity to rest against the first anvil 4 with the second end surface 7b, the outer surface 3b of the locking ring 3 may comprise recesses 11 above the first subsection 7a as seen in the axial direction 3' of the locking ring. This will contribute to the pivoting/tilting over of the locking ring to rest with the second subsection 7b against the first anvil 4 only by the aid of the force of gravity. According to one embodiment, the normal direction from the second axial end surface 8, i.e. the direction perpendicular from the surface of the subsection 8, is parallel to the normal direction of the first subsection 7a of the first axial end surface 7. According to one embodiment, the locking ring 3 comprises a protruding device 10 arranged in the first axial end surface 7, preferably in the second subsection 7b, wherein the protruding device 10 is adapted to fit in a corresponding recess 4e in the first anvil 4 which is shown in Fig. 2a. One purpose is to prevent rotation of the locking ring 3 in relation to the first anvil when the locking ring 3 is arranged in the first anvil 4 and the protruding device 10 is arranged in the recess 4e. Another purpose is that the protruding device 10 further contributes to make the distance a₂ as short as possible by the aid of friction between the device 10 and inner walls in the recess 4e preventing the force of gravity from pivoting the locking ring 3 around the pivot axis 9'. According to one embodiment, a spring (not shown) is arranged in its one end to the locking ring 3 in the first end surface 7a, preferably on the opposite side of the protruding device 10. Such spring device rests with its second end against the first anvil 4 and has such length and spring force that the locking ring 3 is biased to rest against the anvil 4 with its second end surface 7b. This is for instance useful when the element 2 shall be locked to a cylinder device 6 which is in a non-vertical direction where the force of gravity contributes to the biasing of the locking ring 3 to rest with its second end surface 7b against the first anvil 4. The locking ring 3 is preferably made of metal. According to one embodiment, the locking ring 3 is made of zinc, which admits a high level of measurement accuracy or true gauge, stiffness and ability to mix thick and thin materials in the locking ring 3 without negatively impacting the casting of the locking ring 3. Other material that give small tolerances during production and is used in other embodiments is rustless steel or stainless steel or sintered material. Further, for instance zinc admits the possibility to double casting the locking ring 3 with for instance a plastic material. According to one embodiment, the inner surface 3a of the locking ring can therefore comprise a surface or thin coating which provides a high friction between the locking ring 3 and the cylinder device 6, or provides a higher friction compared to the friction between the other materials of the locking ring 3 and the cylinder device 6, such as for instance a plastic coating or rubber. Such surface or coating further contributes to making this surface soft and reduce its influence on sensitive surfaces of a cylinder shaped device and prevent scratches on the same. The quality of the plastic can be chosen to provide a sufficient friction between the locking ring 3 and a cylinder shaped device 6.

Fig. 2a shows a cross-sectional view of a device 1 for locking of an element 2 to a cylinder device 6 (not shown) comprising the element 2 and the locking ring 3. The element 2 further comprises a first anvil 4 and a second anvil 5. In Fig. 2a the first anvil 4 is arranged at a certain distance to the second anvil 5. The first anvil 4 according to one embodiment further comprises a cup-shaped device 4a adapted to receive the locking ring 3, which is arranged in the cup-shaped device 4a. The cup-shaped device 4a comprises an essentially cylinder shaped recess having a wall 4b extending in an axial direction and further comprises at least a subsection 4c having a normal direction essentially parallel to the wall 4b of the cup-shaped device 4a. The subsection 4c can according to one embodiment constitute the entire bottom surface of the cup-shaped device 4a. The first anvil 4 shows a threading section 4d in the wall 4b adapted to receive the second anvil 5 by the aid of corresponding threading section 5d of the second anvil 5. The second anvil 5 according to one embodiment, has a cylindrical or ring shaped or annular-shaped design having threading section 5d arranged on its outer side. On one side of the anvil 5 a gripping section 5e arranged which extends in a radial direction from the cylinder shape of the anvil 5 to increase the torque when the anvil 5 is rotated and the threading section 5d engages the threading section 4d. The anvils 4, 5 are arranged to be movable relative each other or in relation to each other between a first and a second position, whereby the first and second anvils 4, 5 are at a shorter distance from each other in the second position than in the first position, whereby the second anvil 5 can be locked in relation to the first anvil 4 to prevent a movement from the second position to the first position. According to this embodiment the locking occurs by the engagement of the threading sections 4d, 5d with each other. The locking ring 3 is arranged in the cup-shaped device 4a resting with at least the fulcrums 9a, 9b, but also with at least part of the second subsection 7b against subsection 4c of the anvil and is in a first position. A protruding device 10 of the locking ring 3 is fitted in the recess 4e in the anvil 4 which prevents rotation of the locking ring 3 in relation to the element. Furthermore, the friction of the locking ring prevents rotation around the tube of both the locking ring, and the element since it is connected via the recess to the locking ring. Other alternative embodiments of the first and second anvils 4, 5 are possible. According to one embodiment, the anvils 4, 5 instead of having a respective threading section 4d, 5d, can be arranged with detent devices (not shown). The essential aspect is that anvils 4, 5 can comprise the locking ring 3 and be brought together and the locking ring 3 such that the locking ring is brought to change its position and is locked between the anvils 4, 5 and the anvils 4, 5 can be locked in relation to each other. Preferably the anvils 4, 5 are releasably lockable in relation to each other. According to one embodiment, when the cylinder device is arranged in a horizontal direction a spring is arranged on the second anvil 5 extending in an axial direction of the anvil 5 to bring the locking ring 3 into the cup-shaped device 4a of the second anvil 5.

Fig. 2b shows a cross-section of the device 1 for locking of an element 2 to a cylinder device 6, wherein a cylinder device 6 is arranged through the element 2. The first and second anvils 4, 5 are in a first position, as is the locking ring 3. In this position, the locking ring 3 as well as the element 2 is freely movable relative the axial direction 6' of the cylinder device 6 as the inner wall 3a of the locking ring has a distance to the outer wall 6b of the cylinder device 6. For the same reason, naturally, the opposite may be true, i.e. the cylinder device 6 can be freely movable in relative the element 2. The normal direction 7a' of the first end surface 7 has an angle α, defined as α₁ in the first position, to the axis 3' of the locking ring but also an angle β defined as β₁ in the first position, in relation to the axis 6' of the cylinder device. In this first position the second subsection 7b rests against the first anvil 4 and the first subsection 7a has a distance to the first anvil 4.

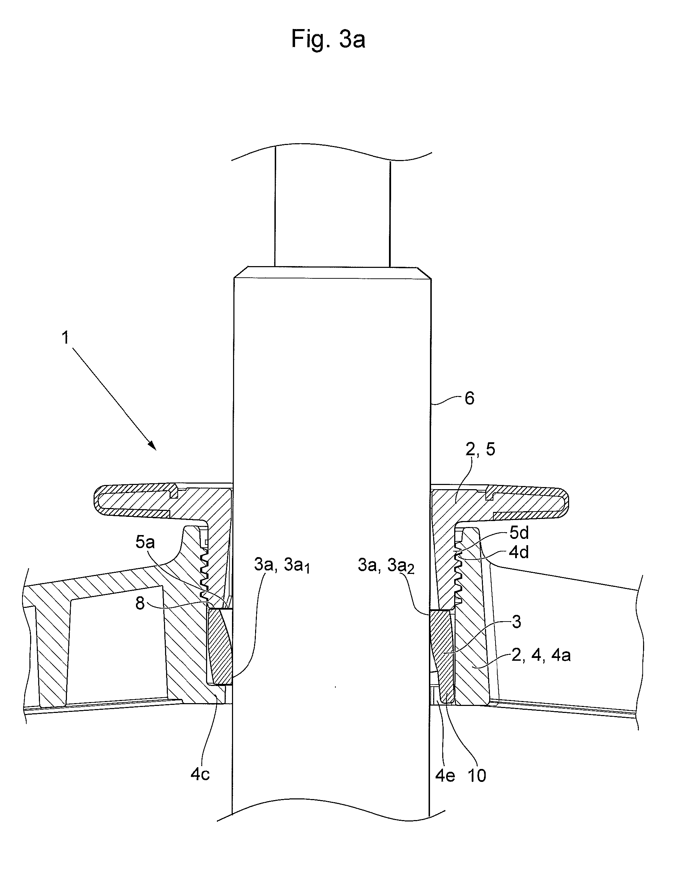

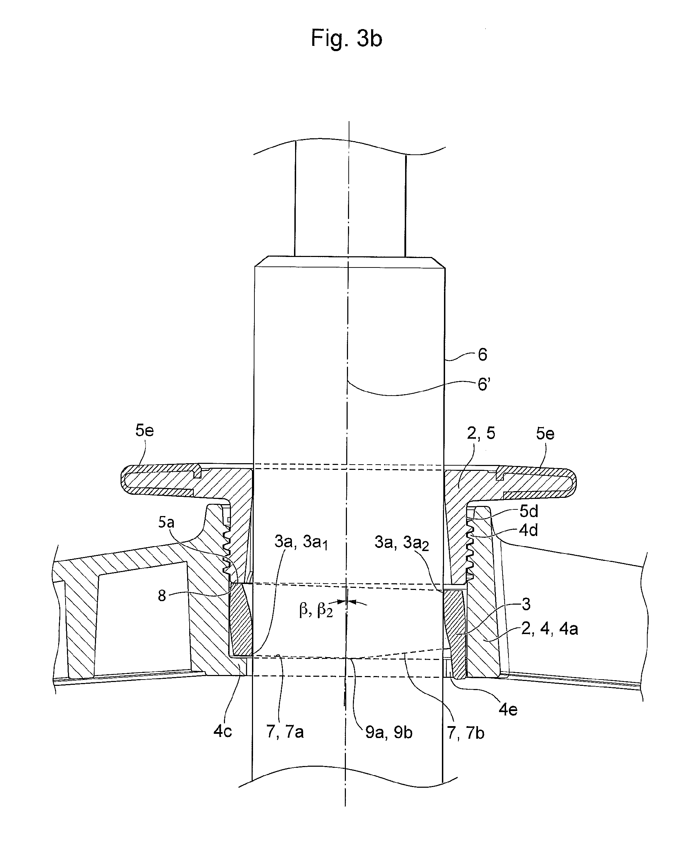

Fig. 3a shows the device 1 for locking of an element 2 to a cylinder device 6, wherein a cylinder device 6 is arranged through the element 2. The first and second anvils 4, 5 are in a second position, as is the locking ring 3, due to that the second anvil 5 has been screwed into the first anvil 4. The first and second anvils 4, 5 are therefore at a shorter distance from each other than in the first position. In this second position the second subsection 7b has a distance to the first anvil 4. According to one embodiment, the first subsection 7a in this second position can rest against the first anvil 4. According to another embodiment, the first subsection 7a has a distance to the first anvil in this second position. The surface 8 has therefore come into contact with an axial end surface 5a of the anvil 5, which anvil 5 thereby influences or presses the ring 3 downwards such that it is clamped between the first and second anvil 4, 5. By this clamping of the ring 3, the locking ring is initially pivoted around the pivot axis 9', whereby the normal direction 7a' of the first subsection 7a is brought to change direction such that the angle β and thereby β₂ in the second position is less than β₁. According to one embodiment, can β = 0 in the second position. According to another embodiment can β < 0 in the second position. By the pivoting in the second position a first subsection 3a₁ of the inner surface 3a of the locking ring of the first axial end surface 7 will press against the outer surface 6a of the cylinder device and a second subsection 3a₂ of the inner surface 3a of the locking ring diametrically opposite the first subsection 3a₁ will press against the outer surface 6a of the cylinder device. The first subsection 3a₁ of the inner surface 3a of the locking ring corresponds to an area at a distance from the first subsection 7a of the first end surface 7 which distance is ≤ 50% of the total distance from the first subsection 7a to the second end surface 8 along the inner surface 3a, whereby the second subsection 3a₂ of the inner surface 3a of the locking ring corresponds to an area at a distance from the second end surface 8 which distance is ≤ 50% of the total distance from the second end surface 8 to the second subsection 7b of the first end surface 7 along the inner surface 3a according to one embodiment. According to another embodiment, these respective distances are between 10-30% of the total distance along the respective inner wall 3a. These distances 3a₁ and 3a₂ are dependent on the material of the inner surface 3a of the locking ring 3, i.e. a flexible material on the inner surface 3a increases the subsections 3a₁ and 3a₂ respective lengths in relation to a locking ring 3 that does not have a plastic coating material or plastic layer or any other soft surface on its inner surface 3a but for instance consists of zinc or other metals such as for instance stainless steel, or sintered material. The contact surface in terms of part of the circumference of the inner surface 3a of the locking ring further depends on the degree of flexibility of the inner surface 3a, i.e. according to one embodiment of the degree of flexibility of the plastic coating or layer. The higher the flexibility the larger the contact surface. According to one embodiment, the contact surface can be 75% of the circumference of the inner surface 3a of the locking ring.

If the locking ring 3 is pressed together sufficiently hard between the anvils 4, 5 a situation arises according to one embodiment wherein the angle β₂ is essentially 0, i.e. parallel to the axis 6' of the cylinder device. The pressing of the locking ring 3 against the cylinder device 6 creates an increased friction between the cylinder device 6 and the locking ring 3. The locking ring 3 will in the second position lock the cylinder device 6 in relation to the locking ring 3. According to one embodiment, the inner surface 3a of the locking ring is convex which facilitates the release of the cylinder device 6 in relation to the locking ring 3 and that they can run relatively freely in a first position. At the same time, the convexity of the inner surface 3a will enable a faster establishing of a locking between the locking ring 3 and the cylinder device 6 when the anvils move from a first to a second position than would have been the case if the inner surface 3a for instance had been flat. According to one embodiment, the inner surface 3a can have a wedge-shaped design, in such way that the wall of the ring is widest at the first subsection 3a₁ in connection to the first end surface 7 and be narrowest at the second subsection 3a₂ near the second end surface 8. According to one embodiment the locking ring 3 is coated with a plastic coating/layer on its inner surface 3a whereby this plastic layer has been chosen such that the locking ring 3 safely locks to the cylinder device 6 even at a low pressure or tensional force, i.e. without the anvils 4, 5 having been screwed maximally close to each other, whereby the locking ring 3 also easily can be moved in relation to the cylinder device 6 in an unlocked position.

Since the element 2 comprises the anvils 4, 5 which are connected and locked on each side of and comprising the locking ring 3, also these will be locked in relation to the cylinder device 6 in a second position. The element 2 can further according to one embodiment comprise a foot support 4a or a foot base or star base, which is separate from or integrated with preferably the first anvil 4. According to one embodiment, the where the foot support 4a is separate from the anvils 4, 5 these anvils 4, 5 comprise sections which are adjacent to the foot support 4a and with a respective force acting on a respective side of the foot support 4a so that this is pressed together between the anvils 4, 5. According to one embodiment, the cylinder shaped device 6 is a tubular device, for instance comprising very thin walls. According to one embodiment, the tubular device constitutes a leg for a chair comprising a gas spring for enabling a raising and lowering of the position of the chair. According to one embodiment, the tubular device constitutes a leg for a table and the element comprises or is connected to a display wall which thereby can be locked to the table leg.

The above provided description of embodiments shall not be seen as limiting but can freely be combined within the scope of the claims. All the described alternative embodiments above or parts of an embodiment can be freely combined without departing from the inventive idea as long as the combination is not contradictory.

## Claims

1. A device (1) for locking of an element (2) to a cylinder device (6) extending in an axial direction,
the device (1) further comprising a locking ring (3) and the element (2),
wherein the element (2) comprises a first anvil (4) and a second anvil (5) arranged to be moved in relation to each other in the axial direction of the cylinder device (6) between a first position and a second position, wherein the first and second anvils (4, 5) are at a shorter distance from each other in the second position than in the first position, wherein in the first anvil (4) and the second anvil (5) can be locked in relation to each other to prevent a movement from the second position to the first position,
wherein the locking ring (3) comprises an axis (3'), wherein the locking ring (3) has a first axial end surface (7) and a second axial end surface (8), wherein at least the first end surface (7) comprises at least a first subsection (7a) wherein the normal direction (7a') of the first subsection (7a) has an angle α≠0 to the axis (3') of the locking ring (3),
wherein the locking ring (3) is arranged between the first anvil (4) and the second anvil (5) such that the locking ring (3) in the first position can be moved freely in the axial direction of the cylinder device (6) whereby the normal direction (7a') of the first subsection (7a) of the first end surface (7) has an angle β=β₁ in the first position to the axis (6') of the cylinder device (6), wherein the locking ring (3) in the second position is clamped between the first (4) and second anvil (5) such that the normal direction (7a') of the first subsection (7a) is caused to change direction such that the angle β=β₂ in the second position, whereby β₂ < β₁, whereby the locking ring (3) is locked to the cylinder device (6) by the pressing of a first subsection (3a1) of the inner surface (3a) of the locking ring against the outer surface (6') of the cylinder device (6) and by the pressing of a second subsection (3a2) of the inner surface (3a) of the locking ring against the outer surface (6') of the cylinder device.

2. The device (1) for locking of an element (2) to a cylinder device (6) according to claim 1, **characterized in that** the inner surface (3a) of the locking ring is convex.

3. The device (1) for locking of an element (2) to a cylinder device (6) according to any of the previous claims, **characterized in that** the angle α is in the interval 0< α ≤20°, more preferably in the interval 2°≤ α ≤15°, most preferably the angle α is in the interval 3°≤ α ≤7°.

4. The device (1) for locking of an element (2) to a cylinder device (6) according to any of the previous claims, **characterized in that** the first axial end surface (7) further comprises a second subsection (7b) having a normal direction (7b'), whereby (7a') ≠ (7b'), whereby the first axial end surface (7) comprises a first and a second fulcrum (9a, 9b) in the transitions between the first subsection (7a) and the second subsection (7b), and a pivot axis (9') that extends through the first and second fulcrum (9a, 9b), wherein the second subsection (7b) rests against the first anvil (4) and the first subsection (7a) has a distance to the first anvil (4) in the first position, wherein the second subsection (7b) has a distance to the first anvil (4).

5. The device (1) for locking of an element (2) to a cylinder device (6) according to claim 4, **characterized in that** a distance a₁ from a center point 9c between the first and second fulcrums (9a, 9b) along the pivot axis (9') to an outer surface (3b) of the locking ring (3) perpendicular from the pivot axis (9') is shorter than a distance a₂ from the center point (9c) perpendicular from the pivot axis (9') to the outer surface (3b) which is opposite the outer surface defining the distance a₁.

6. The device (1) for locking of an element (2) to a cylinder device (6) according to any of the previous claims, **characterized in that** the outer surface (3b) of the locking ring (3) axially directed from the first subsection (7a) comprises recesses.

7. The device (1) for locking of an element (2) to a cylinder device (6) according to any of the previous claims, **characterized in that** the normal direction (7a') of the first subsection (7a) of the first axial end surface (7) is parallel to the normal direction of the second axial end surface (8).

8. The device (1) for locking of an element (2) to a cylinder device (6) according to any of the previous claims, **characterized in that** a protruding device (10) is arranged in the first axial end surface (7), wherein the protruding device (10) is adapted to fit in a recess (4e) in the first anvil (4) to prevent rotation of the locking ring (3) in relation to the element (2).

9. The device (1) for locking of an element (2) to a cylinder device (6) according to any of the previous claims, **characterized in that** the first anvil (4) comprises a cup-shaped device (4a) which is adapted to receive the locking ring (3).

10. The device (1) for locking of an element (2) to a cylinder device (6) according to any of the previous claims, **characterized in that** the second anvil (5) comprises a threading section (5'), and that the first anvil comprises a threading section (4') adapted to receive the threading section (5') of the second anvil such that the anvils (4, 5) can be screwed into each other from a first to a second position.

11. The device (1) for locking of an element (2) to a cylinder device (6) according to any of the previous claims, **characterized in that** the inner surface (3a) of the locking ring comprises a surface or a coating which increases the friction between the cylinder device and the locking ring, such as for instance a plastic layer or rubber.

12. The device (1) for locking of an element (2) to a cylinder device (6) according to any of the previous claims, **characterized in that** spring is arranged on the second anvil (5) extending in an axial direction of the anvil (5) to move the locking ring (3) into the cup-shaped device (4a) of the second anvil (5).

13. The device (1) for locking of an element (2) to a cylinder device (6) according to any of the previous claims, **characterized in that** the first subsection (3a1) of the inner surface (3a) of the locking ring corresponds to an area at a distance from the first subsection (7a) of the first end surface (7) which distance preferably is less than 50%, more preferably between 10-30% of the total distance from the first subsection (7a) to the second end surface (8) along the inner surface (3a), wherein the second subsection (3a2) of the inner surface (3a) of the locking ring corresponds to an area at a distance from the second end surface (8) which distance preferably is less than 50%, more preferably between 10-30% of the total distance from the second end surface (8) to the second subsection (7b) of the first end surface (7) along the inner surface (3a).

14. Locking ring (3) for use in a device (1) according to any of the claims 1-13.
